# EUROPEAN PATENT APPLICATION

(11) **EP 3 656 211 A1**
(43) Date of publication of application: **27.05.2020**
(21) Application number: 17918552.5
(22) Date of filing: 18.07.2017
(51) Int. Cl.: A01K 1/03, A01K 1/00, A01K 1/01

(54) **PET INCUBATOR**

(71) Applicant: Auto Elex Co., Ltd., Gimhae-si, Gyeongsangnam-do 50805 (KR)
(72) Inventor: BAE, Jong-yoon, Gimhae-si, Gyeongsangnam-do 50952 (KR)
(74) Representative: Conti, Marco
(86) International application number: PCT/KR2017/007688
(87) International publication number: WO 2019/017505

(57) **Abstract**

A pet incubator includes a case body, an inner chamber, a control assembly, an air circulation unit and a lighting unit. In particular, a control assembly is configured to be detachable while sliding in a drawer type from the case body and the inner chamber to make the animal in the incubator feel as uncomfortable as possible and to simply achieve the maintenance and inspection.

## Description

### TECHNICAL FIELD

The present invention relates to a pet incubator that provides a space for recovering the health for an animal while protecting the animal. More specifically, the present invention relates to a new type of pet incubator that can be easily maintained and provide a beautiful appearance while making the animal in the incubator feel as uncomfortable as possible.

### BACKGROUND

In general, the incubators for pets are devices that provide a recovery space where the pet can be treated while being temporarily protected until the pet is recovered from surgery or treatment.

Such pet incubators are disclosed in Korean Registration Patent No. 10-0343625, Korean Registration Patent No. 10-0497737, Korean Patent Laid-Open Publication No. 10-2011-0091930, Korean Utility Model Application No. 20-0300258, Korean Registration Utility Model Application No. 20-0365892, etc.

That is, the conventional pet incubator has been made to have a space blocked from the external environment and the inside of the space has been configured to be observed from the outside. In addition, such an incubator has been made of various shapes and providing various functions such as being configured to smoothly control the temperature, humidity and ventilation of the interior space.

However, in the conventional pet incubator as described above, the electronic components for various controls is installed to be distributed in various parts. Accordingly, when a problem such as a malfunction of the incubator occurs, it was difficult to maintain, for example, to disassemble the entire pet incubator. In addition, when a malfunction occurs in any one of the components, there was an inconvenience that the entire pet incubator had to be sent to a customer service center.

In addition, in the conventional pet incubator as described above, when the pet evacuates excrement in the incubator, the excrement could not be cleaned until the user correctly recognizes the excrement. Therefore, there is a problem that the generation of contamination can be caused again by the excrement, such as attached again in the body of the pet.

In addition, the conventional pet incubator as described above merely provides a ventilation function for discharging air in a room to the outside. Accordingly, since the air circulation function and the ventilation function of the air in the room cannot be selectively provided, it was difficult to maintain the temperature in the pet incubator at an appropriate temperature.

In addition, the conventional pet incubator as described above may only perform a ventilation function of simply discharging the air in an interior space to a room or blowing the air in the room to the interior space when a temperature of the space provided with the pet incubator is high. Accordingly, there is a problem that cooling is not suitable for the recovery of pets in the hot summer season since the cooling to a lower temperature than the temperature of the room is practically not performed.

In addition, the conventional pet incubator as described above is formed so that the chamber is formed of a metal material and its respective wall surfaces are integrated by simply welding each other. Therefore, there is a problem that the work for the manufacture is difficult.

In addition, the conventional pet incubator as described above is designed only with a simple structure of the external shape in order to maintain the robustness of the internal and external forces of the product. Accordingly, there was a dissatisfaction of the consumer due to the appearance not considering the aesthetics.

### SUMMARY

The present invention is to solve the various problems according to the prior art described above, and the object of the present invention is to provide a new type of pet incubator that can be easily maintained and provide a beautiful appearance while making the animal in the incubator feel as uncomfortable as possible.

In accordance with an embodiment of the present invention, there is provided a pet incubator includes a case body which forms an appearance and having an opening and closing door formed of a transparent material so as to be able to observe an inside of the pet incubator and installed on a front surface of the pet incubator to be opened and closed; an inner chamber installed in the case body and providing an incubating space of the pet, a front surface thereof being opened; a control assembly provided with a main control unit for operation control and installed so as to be positioned on an upper side of the inner chamber of the inside of the case body and taken out while sliding out of the case body; an air circulation unit installed in the control assembly and operated by the control of the main control unit to circulate air in the inner chamber or to ventilate the inner chamber and a room; and a lighting unit installed in the control assembly and operated by the control of the main control unit to provide lighting into the inner chamber.

In an embodiment of the pet incubator, the case body includes: edge frames provided at each corner and formed of curvature; an upper frame installed between two upper edge frames of each of the edge frames and forming an upper surface; a bottom frame installed between two lower edge frames of each of the edge frames and forming a bottom surface; and a side frame forming each of both sides.

In an embodiment of the pet incubator, a mounting portion on which the upper frame or the bottom frame is placed is bent and formed on any one end portion to which the upper frame or the bottom frame of the inner surface of each edge frame is coupled, and an extension portion formed by screw grooves for screwing with the side frame is formed at a center end portion of the inner surface of each edge frame, and a strength reinforcing member provided to prevent bending deformation of the edge frame is formed at a portion of the center of the inner surface of each edge frame.

In an embodiment of the pet incubator, the opening and closing door is formed of a transparent material to allow the internal observation.

In an embodiment of the pet incubator, the upper surface and the bottom surface of one end of the opening and closing door is hinged and coupled to the case body, and the other end of the opening and closing door is further provided with a restraint switch unit which is elastically operated to be caught and restrained by the front edge portion of the inner chamber during the non-pressurization and to release the restraint during the pressurization.

In an embodiment of the pet incubator, a plurality of ventilating openings is formed on the surface of the opening and closing door, and each ventilating opening is configured to be opened and closed by an opening and closing cover, the ventilating opening is configured to be formed such that the two hinge plates are protruded on a portion of the circumferential side thereof and formed side by side to face each other, and one portion of the opening and closing cover is configured to be hinged and coupled to the two hinge plates, so that it is made to open and close the ventilating opening while being supported by the two hinge plates, and the opening and closing cover is formed with a cut groove cut to be passed through the two hinge plates, respectively, and each of the cut grooves is formed to be gradually inclined toward the inside from the hinged and coupled portion, so that when the opening and closing cover is opened, the hinge plate is gradually pressed into the cut groove so as not to be completely opened.

In an embodiment of the pet incubator, the inner chamber is configured to include: an edge frame formed in a rectangular frame structure forming an edge portion of the front surface; a body frame forming a wall surface of both sides and a bottom surface and a portion of the rear surface; and an upper frame forming an upper surface and the remaining portion of the rear surface; and wherein each opposing portion between the body frame and the upper frame is configured to be coupled to each other by a coupling member made by injecting a synthetic resin.

In an embodiment of the pet incubator, the body frame is configured to form both side wall surfaces by bending the both sides upward with respect to the bottom surface and to form a portion of the rear surface by bending the portion of the rear side upward, and the upper frame is configured to form the remaining portion of the rear surface by bending a portion of the rear side downward with respect to the upper surface.

In an embodiment, the pet incubator further includes: an excrement receiver formed to be recessed to temporarily store the excrement excreted by the pet is provided, separately from the inner chamber, and coupled and installed in the inner chamber, at a front side portion of the bottom surface in the inner chamber, and coupled and installed in the inner chamber; and a packing member provided in a coupling portion between the inner chamber and the excrement receiver to prevent a gap generated due to the coupling portion.

In an embodiment of the pet incubator, guide portions for supporting a sliding movement of the control assembly are provided at both sides of the upper surface of the inner chamber, respectively, and wherein the control assembly is installed to receive the guide of each guide portion and taken out while being slidingly moved back and forth in a drawer type.

In an embodiment of the pet incubator, a restraining flange is bent and formed on inner wall surfaces of both sides of the case body, and a restraining jaw constrained to prevent left and right movement by engaging the restraining flange when received in the case body is protruded and formed on both sides of the control assembly.

In an embodiment of the pet incubator, a first air inlet and a first air outlet are sequentially arranged side by side along the front and rear directions and spaced apart from each other on the upper surface of the inner chamber, and are sequentially penetrated and formed, and the control assembly is configured such that a second air inlet communicated corresponding to the first air inlet and a second air outlet communicated corresponding to the first air outlet are penetrated and formed, respectively, when the control assembly is received in the case body, and the air circulation unit is configured to include: a duct body formed as a box body in which the bottom surface and rear surface are opened, and installed to cover the second air inlet and the second air outlet at the same time while being installed along a formation direction of the second air inlet and the second air outlet; and a blowing fan forcibly blowing air while being installed between a space in communication with the second air inlet and a space in communication with a second air outlet.

In an embodiment of the pet incubator, the rear side space in the duct body is further provided with a partition plate for selectively blocking the second air outlet and any portion of the open rear surface of the duct body, the partition plate is rotatably coupled to a hinge at the rear end of the duct body, and a tilting gear having a fan-shaped structure is fixedly installed at a portion of the hinge exposed to the outside of the duct body, the outer surface of the duct body is further provided with a tilting motor which provides a driving force to rotate the tilting gear while a pinion gear engaged with the tilting gear is axially coupled.

In an embodiment of the pet incubator, a through hole is penetrated and formed in a portion of the center side of the upper surface of the inner chamber, a communication hole communicated corresponding to the through hole is penetrated and formed in the control assembly when the control assembly is received in the case body, the lighting unit is configured to include: an lighting lamp positioned adjacent to the communication hole of the upper surface of the control assembly to provide the lighting; and a reflection duct installed to surround the lighting lamp in which a portion of the direct upper side of the communication hole is formed to be inclined and the lighting according to the light emitted from the lighting lamp into the inner chamber is reflected.

In an embodiment, the pet incubator further includes: a cooling unit for cooling the inner chamber between the bottom surface of the case body and the bottom surface of the inner chamber.

In an embodiment of the pet incubator, the cooling unit is configured to include: a cooling pad that is heat-exchanged while being in close contact with the bottom of the inner chamber; one or at least two thermoelectric elements installed in close contact with the bottom surface of the cooling pad in which an endothermic reaction is performed at the contact surface with the cooling pad by the power supply and an exothermic reaction is performed at the opposite surface; a heat dissipation fin coupled to a surface on which the exothermic reaction of the thermoelectric elements is made and dissipating heat generated by the exothermic reaction; and a heat dissipation fan for blowing heat dissipation air to the heat dissipation fin.

### BRIEF DESCRIPTION OF THE DRAWINGS

FIG. 1 is a perspective view illustrating an external structure of a pet incubator according to an embodiment of the present invention.
FIG. 2 is an exploded perspective view illustrating an internal structure of the pet incubator according to an embodiment of the present invention.
FIG. 3 is an enlarged view of a portion "A" of FIG. 2;
FIG. 4 is a cross-sectional view illustrating a case body of the pet incubator according to an embodiment of the present invention.
FIG. 5 is an enlarged view of a portion "B" of FIG. 4.
FIG. 6 is an exploded perspective view illustrating an opening and closing door of the pet incubator according to an embodiment of the present invention.
FIG. 7 is an exploded perspective view illustrating a restraint switch unit of the pet incubator according to an embodiment of the present invention;
FIG. 8 is an enlarged view of a main portion illustrating the restraint switch unit of the pet incubator according to an embodiment of the present invention.
FIG. 9 is a perspective view illustrating an inner chamber of the pet incubator according to an embodiment of the present invention.
FIG. 10 is an exploded perspective view illustrating the inner chamber of the pet incubator according to an embodiment of the present invention.
FIG. 11 is a cut-off perspective view illustrating the binding structure for an excrement receiver of the pet incubator according to an embodiment of the present invention.
FIG. 12 is a perspective view illustrating a control assembly of the pet incubator according to an embodiment of the present invention.
FIGS. 13 to 15 are perspective and enlarged perspective views illustrating a structure for restraining the control assembly of the pet incubator according to an embodiment of the present invention.
FIG. 16 is a perspective view illustrating an external structure of an air circulation unit of the pet incubator according to an embodiment of the present invention.
FIG. 17 is a perspective view of a main portion illustrating an operation state of the air circulation unit during the inner air circulation of the pet incubator according to an embodiment of the present invention.
FIG. 18 is a cross-sectional view illustrating the operation state of the air circulation unit during the internal air circulation of the pet incubator according to an embodiment of the present invention.
FIG. 19 is a perspective view of a main portion illustrating the operation state of the air circulation unit during an internal air ventilation of the pet incubator according to an embodiment of the present invention.
FIG. 20 is a cross-sectional view illustrating the operation state of the air circulation unit during the internal air ventilation of the pet incubator according to an embodiment of the present invention.
Figure 21 is a cut-off perspective view of a main portion illustrating a lighting unit of the pet incubator according to an embodiment of the present invention.
FIG. 22 is an exploded perspective view illustrating a cooling unit of a pet incubator according to an embodiment of the present invention,
FIGS. 23 and 24 are state diagrams of a main portion shown illustrating an opening and closing structure for an opening and closing cover of the opening and closing door of the pet incubator according to an embodiment of the present invention.

### DETAILED DESCRIPTION

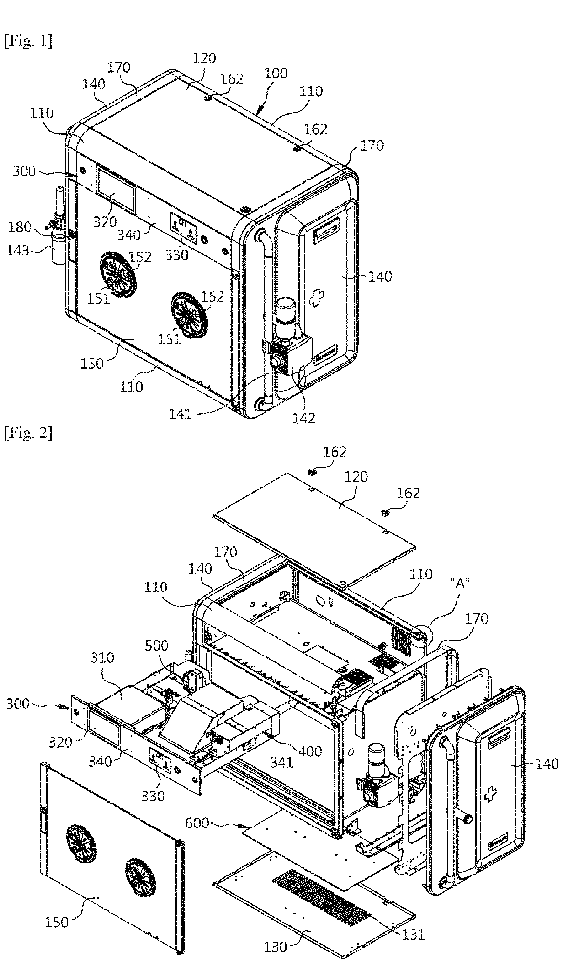

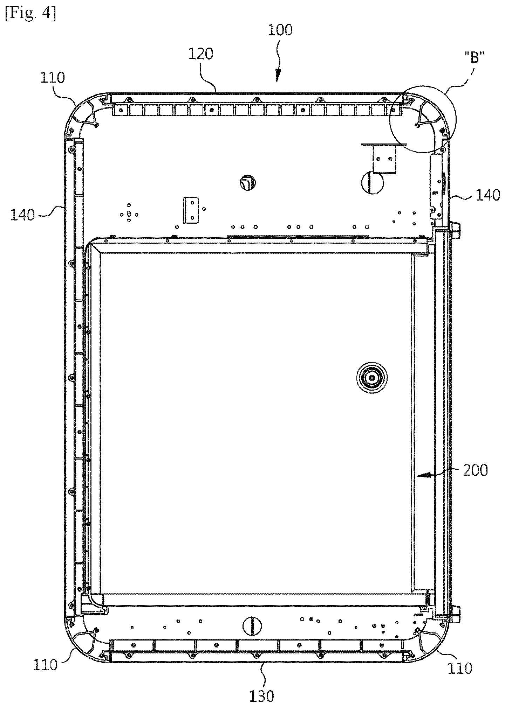

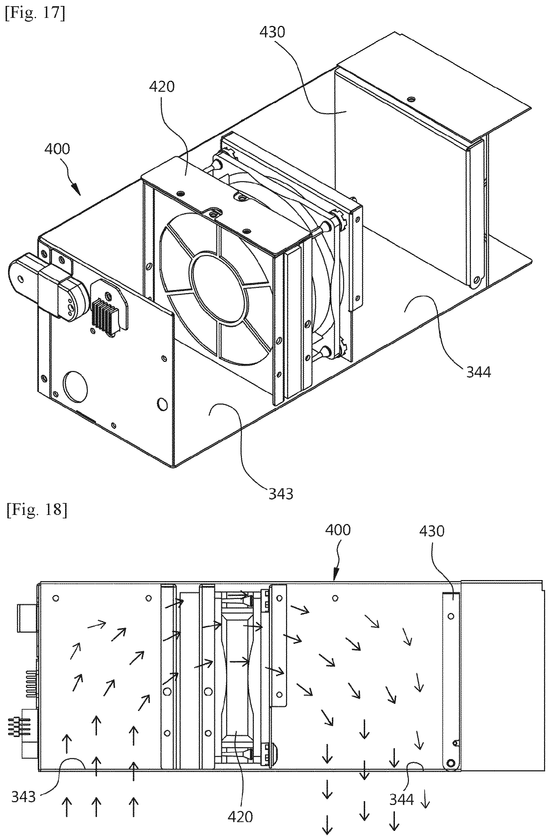

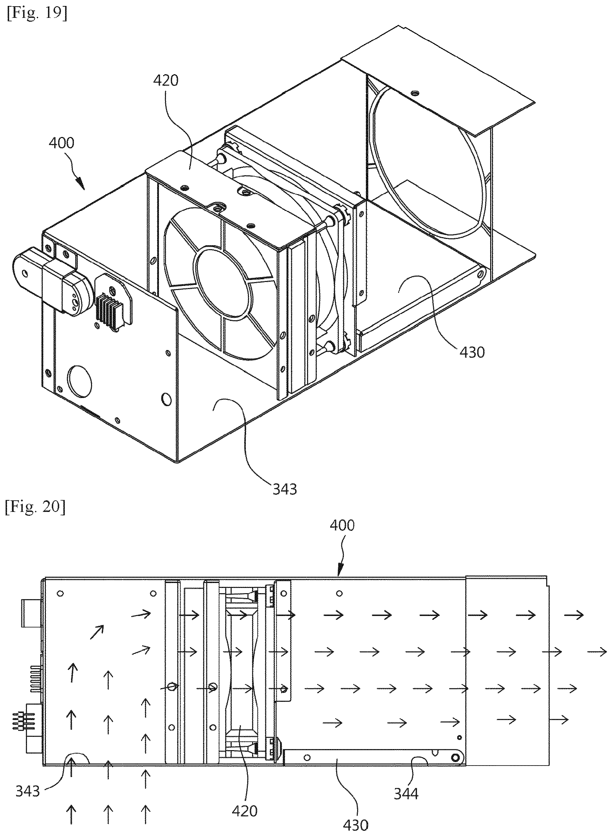

Hereinafter, preferred embodiments of the pet incubator of the present invention will be described with reference to FIGS. 1 to 24.

Prior to the description of the embodiment of the invention, the description for each direction is based on the direction in which the pet incubator is actually seated, and a room may be a space where the pet incubator is installed and may be an outer space of the pet incubator.

In the accompanying drawings, FIG. 1 is a perspective view illustrating an external structure of the pet incubator according to an embodiment of the present invention, and FIG. 2 is an exploded perspective view illustrating an internal structure of the pet incubator according to an embodiment of the present invention.

As shown in the drawings, the pet incubator according to the embodiment of the present invention may be generally configured to include a case body 100, an inner chamber 200, a control assembly 300, an air circulation unit 400, and a lighting unit 500. In particular, the control assembly 300 may be configured to be detachable while sliding in a drawer type from the case body 100 and the inner chamber 200 to make the animal in the incubator feel as comfortable as possible and to simply achieve the maintenance and inspection.

Next, the pet incubator of the present invention will be described in more detail for each configuration.

First, the case body 100 is a part forming the appearance of the pet incubator.

This case body 100 may be configured to include an edge frame 110, an upper frame 120, a bottom frame 130, two side frames 140, an opening and closing door 150, and a rear frame 190.

Herein, the edge frame 110 may be a portion that is provided at each corner of the pet incubator, and may be formed to be curvature in order to give robustness to the internal and external forces.

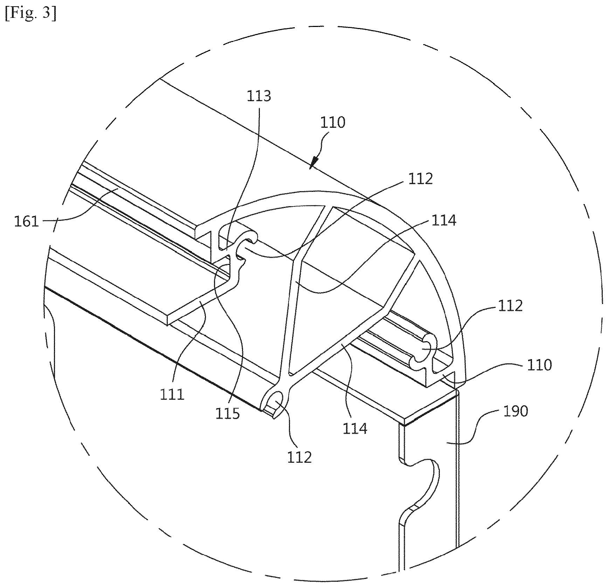

In addition, at any one end portion to which the upper frame 120 or the bottom frame 130 in the inner surface of each edge frame 110 is coupled, a mounting portion 111 on which the upper frame 120 or the bottom frame 130 is placed may be bent and formed. At both ends of the inner surface of each edge frame 110, an extension portion 113 in which the screw groove 112 for screwing the side frame 140 is formed may be bent and formed. At the center portion in the inner surface of each edge frame 110, a strength reinforcing member 114 may be formed to prevent bending deformation of the edge frame 110. These are as shown in FIGS. 3 to 5 attached.

In this case, the screw groove 112 may be used as a fastening portion when screwing with the two side frame 114, and may be formed integrally with the mounting portion 111 when the extension portion 113 is located on the same direction side as the mounting portion 111 in each of the extension portion 113. In addition, the strength reinforcing member 114 may be configured to protrude toward the radial direction of the edge frame 110 from the symmetrical portion in the inner surface of the edge frame 110 and to be bent and formed so that the ends thereof meet each other, and thus bending deformation due to external impact may be prevented.

In addition, the upper frame 120 may be a portion formed between the upper two edge frames 110 of each of the edge frames 110 to form a top surface of the pet incubator.

This upper frame 120 may be installed up and down detachably between the two edge frames 110 to enable simple maintenance for each operating component of the control assembly 300 to be described later through opening and closing as necessary. In this case, the structure for opening and closing of the upper frame 120 may be configured to include a protrusion jaw 161 formed on one end of the edge frame 110 on which the mounting portion 111 is formed, and a rotating manipulator 162 which is installed to penetrate the upper frame 120 and constrained to the protrusion jaw 161 or separated from the protrusion jaw 161.

In addition, the front and rear ends of any one side wall surface of the upper frame 120 is configured to further form an outwardly projecting locking projection 123 to be accommodated and hooked in the hooking jaw 115 bent and formed at a connection portion between the mounting portion 111 and the extension portion 113 of the edge frame 110.

In addition, the bottom frame 130 may be a portion formed between the lower two edge frames 110 of each of the edge frames 110 to form the bottom of the pet incubator. In this case, a plurality of ventilation holes 131 (see FIG. 2) may be formed in the bottom frame 130 to allow air to flow to a bottom space in the case body 100.

In addition, the side frames 140 may be a portion provided to form both sides of the pet incubator, respectively. The two side frames 140 may be coupled to both ends of each edge frame 110 and the upper frame 120 and to both ends of the edge frame 110 and the bottom frame 130 by a ring-shaped guide member 170.

In addition, the outer surfaces of the side frames 140 may be provided with mounting rods 141, respectively, and each mounting rod 141 may be installed with a humidifier 142 for supplying humidification and oxygen in the inner chamber 200 and an oxygen supplier 143.

In addition, the opening and closing door 150 may be a portion that forms the front surface of the pet incubator, and may be formed of a transparent material to allow observation in the inner chamber 200.

In particular, the opening and closing door 150 may be installed to be opened and closed on the open front of the case body 100 to accommodate the pet into the inner chamber 200 through the opened front, or to be able to take out the pet in the inner chamber 200.

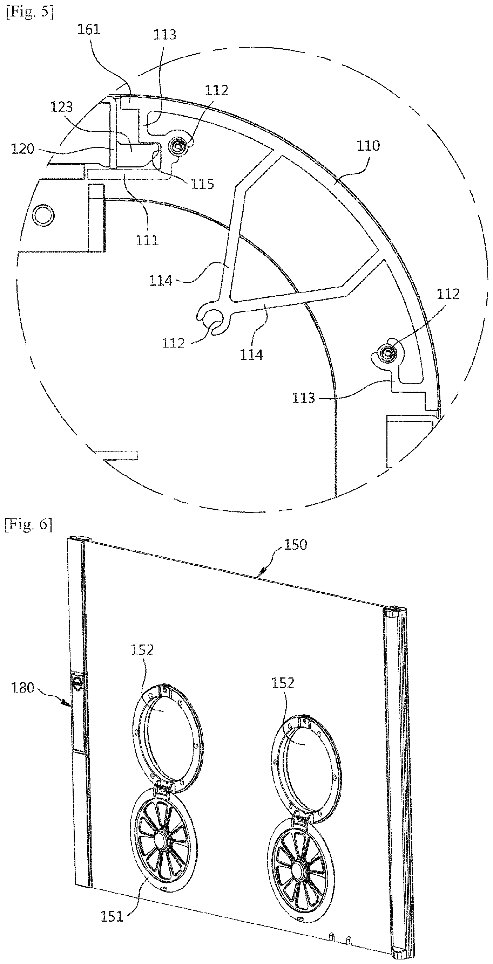

In addition, the upper and lower surface of one end of the opening and closing door 150 may be hinged and coupled to the case body 100, and the other end of the opening and closing door 150 may be further provided with a restraint switch unit 180 for restraining or releasing the restraint of the opening and closing door 150, and a plurality of ventilation holes 152 opened and closed by an opening and closing cover 151 may be formed on the surface of the opening and closing door 150. This is as shown in FIG. 6 attached.

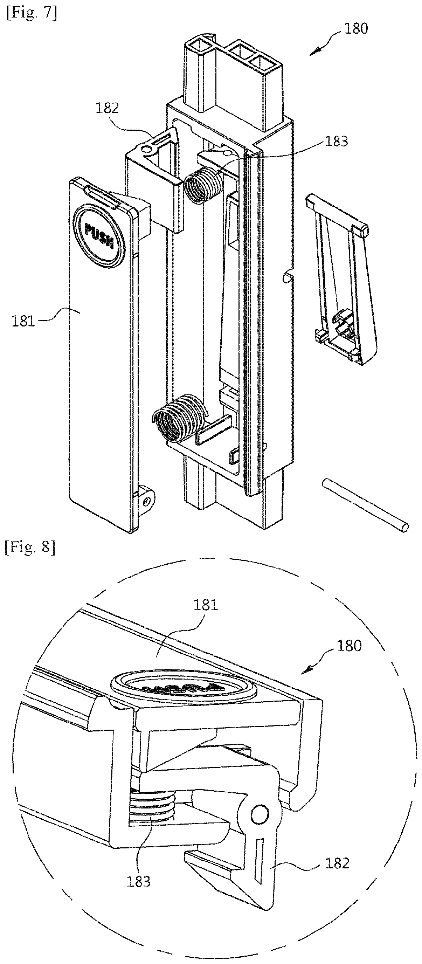

Herein, the restraint switch unit 180 may be configured to include a pressing member 181 and a locking member 182 as shown in FIGS. 7 and 8, wherein the locking from the front edge of the inner chamber 200 is released while the locking member 182 is rotated by the pressing operation of the pressing member 181, and it is caught and restrained by a front edge portion of the inner chamber 200 while the locking member 182 is returned to its original position by restoring the elastic member 183 during the non-pressing operation. That is, due to the structure of the restraint switch unit 180, a locking area of the locking member 182 caught and restrained by the front edge portion of the inner chamber 200 may be maximized. Thus, even though the opening and closing door 150 is impacted in the opening direction by the pet in the inner chamber 200, any unwanted opening of the opening and closing door 150 may be prevented.

Next, the inner chamber 200 may be a portion installed in the case body 100 to provide an incubating space of the pet.

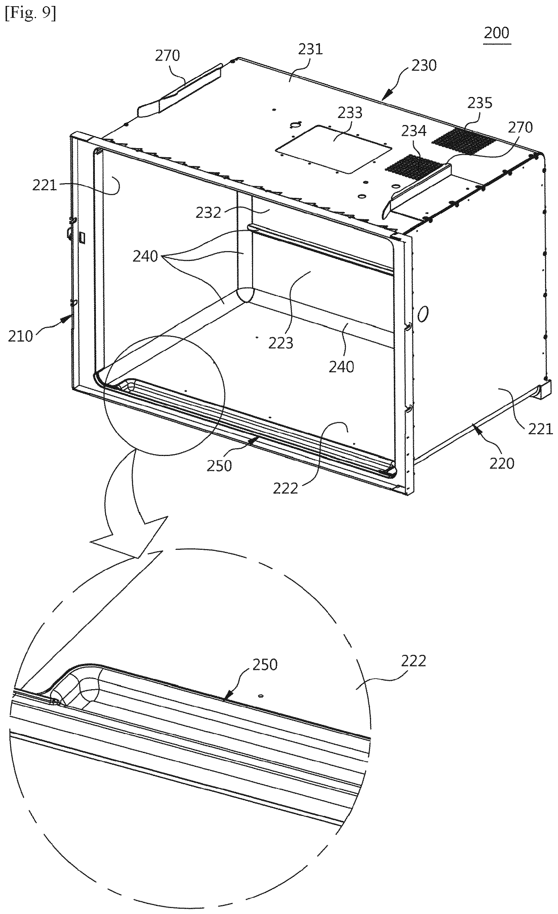

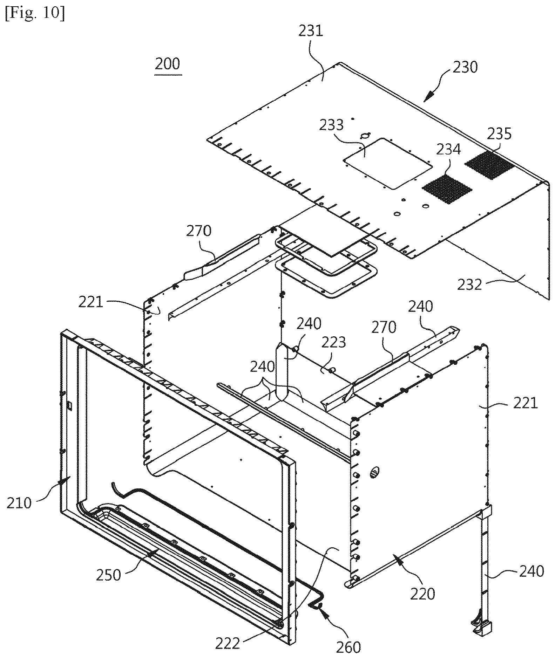

This inner chamber 200 may be formed as a rectangular box body with an opened front surface as shown in FIGS. 9 and 10 and may be configured to include an edge frame 210, a body frame 220, and an upper frame 230.

In particular, the edge frame 210 may be formed in a rectangular frame structure to be provided as an edge portion of the front surface, the body frame 220 may be provided as a portion forming the wall surface 221 of both sides and bottom surface 222 and a portion 223 of the rear surface, and the upper frame 230 may be provided as a portion forming an upper surface 231 and the remaining portion 234 of the rear surface.

Herein, a structure in which the rear surface of the inner chamber 200 is formed by using a portion of the body frame 220 and the upper frame 230 may configure the inner chamber 200 with a minimum coupling portion to prevent the inflow and outflow of the outside air caused by the occurrence of the gap and to make the assembly work as simple as possible.

That is, the body frame 220 may be configured to form the wall surface 221 by bending the both sides upward with respect to the bottom surface 222 and to form a portion 223 of the rear surface by bending the rear side portion upward, and the upper frame 230 may be configured to form the remaining portion 232 of the rear surface by bending a portion of the rear side downward with respect to the upper surface 232, so as to be assembled by a minimum assembly process.

In addition, the opposing portions between the body frame 220 and the upper frame 230 may be configured to be coupled to each other by a coupling member 240 made by injecting a synthetic resin. In this case, the coupling member 240 may be formed such that the two surfaces facing each other may be made to be bolted and fastened while being in close contact with the end surface of each frame 220, 230 and the surface exposed into the inner chamber 200 may be formed to be recessed in a round. Thus, it is possible to maintain the airtight while assembling more easily.

In addition, a through hole 233 may be formed in a portion of the center side of the upper surface provided by the upper frame 230 in the inner chamber 200, and any one first side of the through hole 233 may be formed such that a first air inlet 234 and a first air outlet 235 are sequentially arranged side by side in a state spaced apart from each other along the front and rear directions.

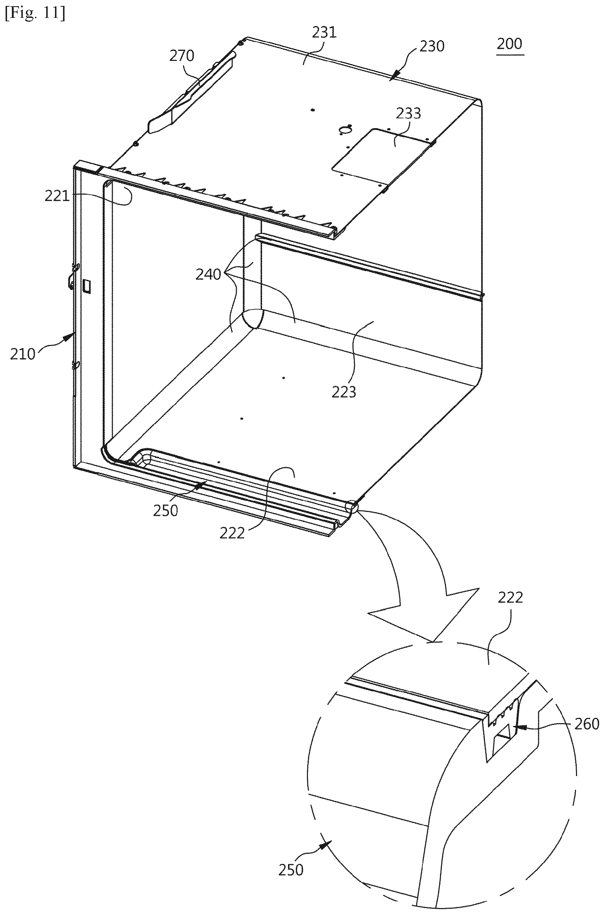

In addition, as shown in FIGS 9 and 11, an excrement receiver 250 formed to be recessed downwardly relative to other parts to temporarily store the excrement excreted by the pet may be provided, separately from the bottom surface of the inner chamber 200, at a front side portion of the bottom surface in the body frame 220 constituting the inner chamber 200, and may be coupled and installed in the body frame 220 constituting the inner chamber 200. That is, even if the user does not accurately recognize whether or not the excretion of the pet through the additional provision of the excrement receiver 250, it may prevent the problem that the pet is contaminated again due to the excrement.

In this case, a packing member 260 may be provided in a coupling portion between the bottom surface of the inner chamber 200 and the excrement receiver 250 (see FIGS. 2 and 11). Thus, it is desirable to be able to prevent leakage of the excrement through a gap generated due to the coupling portion.

In addition, guide portions 270 for supporting a sliding movement of the control assembly 300 to be described later may be provided at both sides of the upper surface of the inner chamber 200, respectively. In this case, the guide portion 270 may be formed by bending a plate.

Next, the control assembly 300 may be configured to control the operation of the pet incubator.

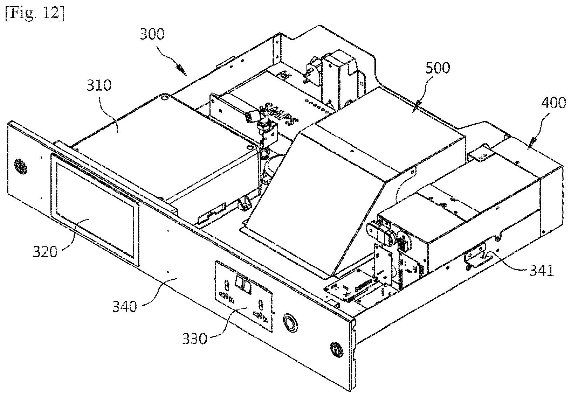

As shown in FIG. 12, this control assembly 300 may be configured to include a main control unit 310 for controlling various operations, a display window 320 for providing various operation information, various operation switches 330 for operation control, and a receiving portion 340 provided to collectively install each of the above components in a batch.

Herein, the receiving portion 340 may be formed in a drawer structure, such that only the front surface of the receiving portion may be positioned to be exposed to the front surface of the pet incubator and the remaining portion may be positioned to be received on the upper surface of the inner chamber 200, which is an upper space in the case body 100. In this case, the display window 320 and the various operation switches 330 may be provided on the front of the receiving portion 340, and the main control unit 310 may be installed in an installation space in the receiving portion 340.

In particular, the both sides of the receiving portion constituting the control assembly 300 may be configured to be installed to receive the guide of each guide portion 200 fixed to both sides of the upper surface of the inner chamber 200 and taken out of the case body 100 while being slidingly moved back and forth in a drawer type.

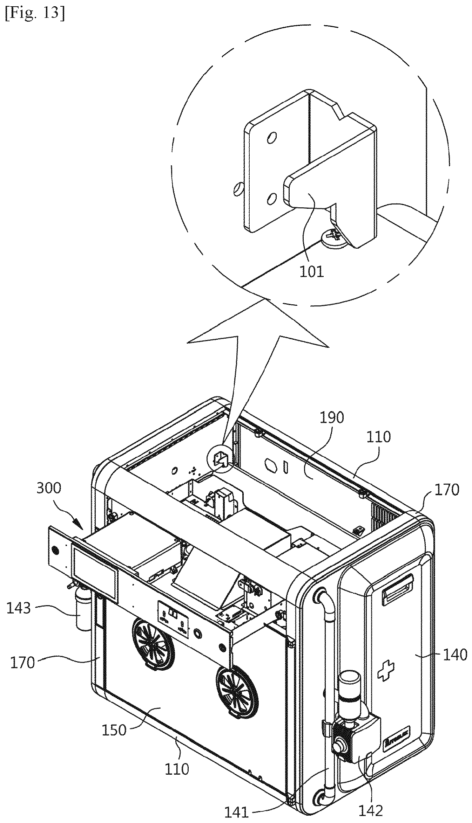

In addition, a restraining flange 101 may be bent and formed on inner wall surfaces of both sides of the case body 100 and a restraining jaw 341 engaging with the restraining flange 101 may be protruded and formed on both sides of the receiving portion 340 constituting the control assembly 300. That is, when the receiving portion 340 of the control assembly 300 is accommodated in the case body 100, since the left and right movement of the receiving portion 340 may be prevented as the restraint flange 101 is restrained by engaging the restraining jaw 341, a takeout phenomenon caused undesirably due to shaking may be prevented. In this regard, it is as shown in FIGS 13 to 15 attached.

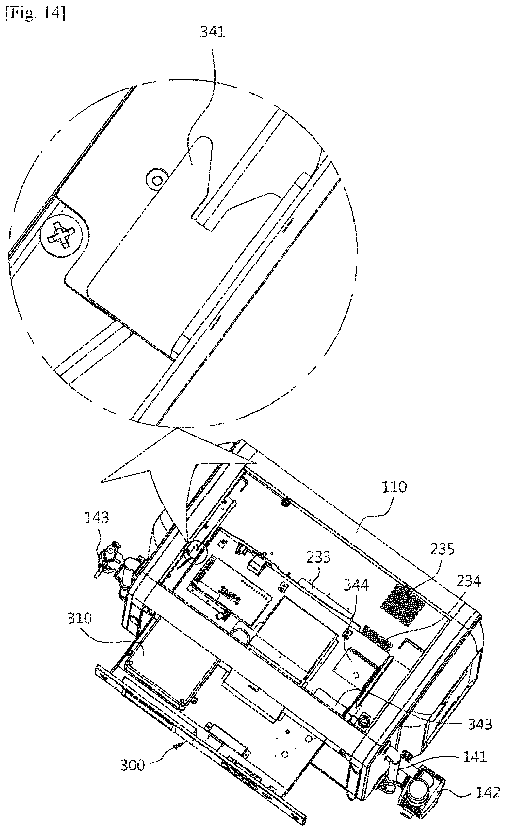

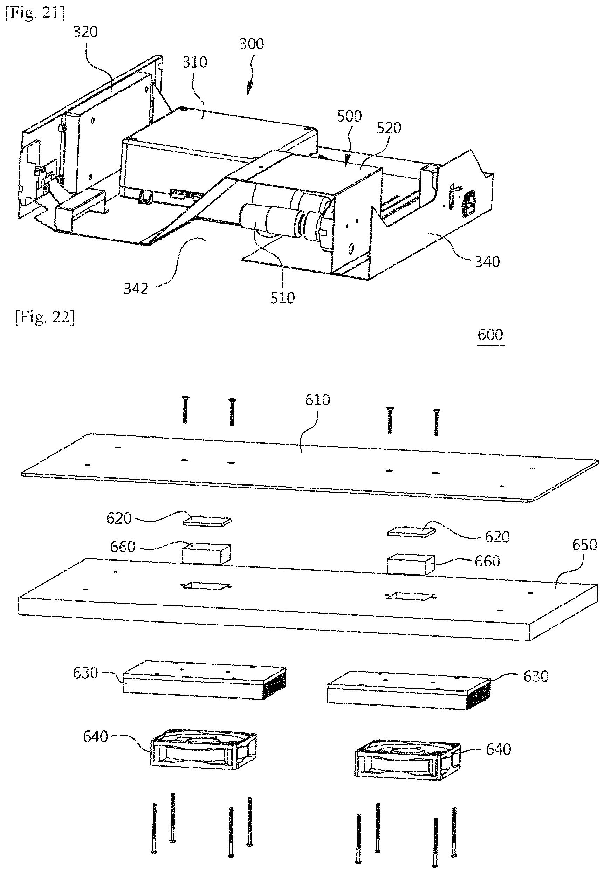

In addition, a communication hole 342 (see FIG. 21 attached) communicated corresponding to the through hole 233 of the upper surface of the inner chamber 200 may be penetrated and formed in the receiving portion 340 constituting the control assembly 300, when the receiving portion 340 is received in the space in the case body 100, and a second air inlet 343 communicated corresponding to the first air inlet 234 of the upper surface of the inner chamber 200 and a second air outlet 344 communicated corresponding to the first air outlet 235 may be penetrated and formed. This is as shown in FIG. 14 attached.

Next, the air circulation unit 400 may be a portion provided for the air circulation in the inner chamber 200.

This air circulation unit 400 may be configured to be installed in the receiving portion 340 constituting the control assembly 300 and operated to be controlled by the main control unit 310.

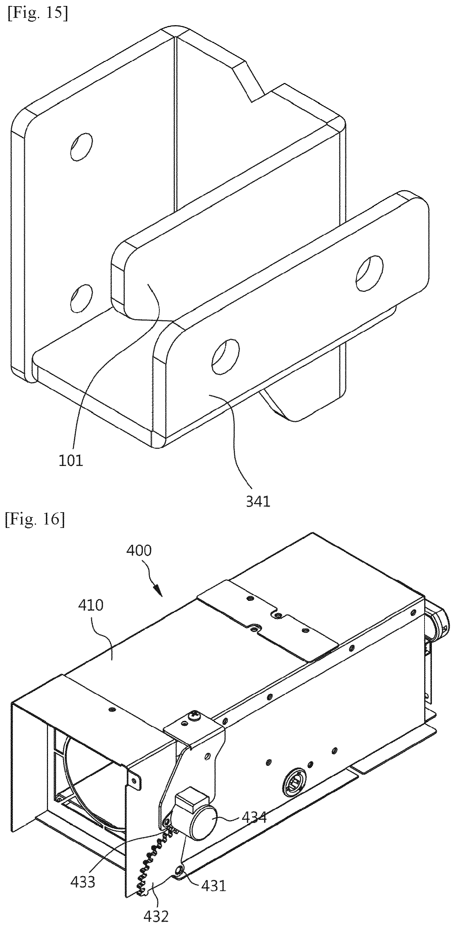

As shown in FIGS. 16 to 20, the air circulation unit 400 may be configured to include a duct body 410 formed as a box body in which the bottom surface and rear surface are opened, and installed to cover the second air inlet 343 and the second air outlet 344 at the same time while being installed along a formation direction of the second air inlet 343 and the second air outlet 344, and a blowing fan 420 forcibly blowing air while being installed between a space in communication with the second air inlet 343 and a space in communication with a second air outlet 344.

In particular, the rear side space in the duct body 410 may be further provided with a partition plate 430 for selectively blocking any one of the second air outlet 344 and the open rear surface of the duct body 410, wherein the partition plate 430 may be rotatably coupled to a hinge 431 at the rear end of the duct body 410, and a tilting gear 432 having a fan-shaped structure may be fixedly installed at a portion of the hinge 431 exposed to the outside of the duct body 410. In addition, the outer surface of the duct body 410 may be further provided with a tilting motor 434 which provides a driving force to rotate the tilting gear 432 while a pinion gear 433 engaged with the tilting gear 432 is axially coupled.

That is, under normal circumstances, the air discharged from the inner chamber 200 may be recycled back into the inner chamber 200 so that the temperature in the inner chamber 200 can maintain a proper temperature. If the ventilation is required for the space in the inner chamber 200, the air discharged from the inner chamber 200 may be exhausted to the outside of the pet incubator, and at the same time, new air in the room may be introduced through the ventilating opening 152 of the opening and closing door 150.

Next, the lighting unit 500 is a portion made to provide lighting into the inner chamber 200.

This lighting unit 500 may be configured to be installed on the receiving portion 340 of the control assembly 300 and operated to be controlled by the main control unit 310.

As shown in FIG. 21, the lighting unit 500 may be configured to include a lighting lamp 510 positioned adjacent to the communication hole 342 of the upper surface of the receiving portion 340 to provide the lighting, and a reflection duct 520 installed to surround the lighting lamp 510 in which a portion of the direct upper side of the communication hole 342 is formed to be inclined and the lighting by the light emitted from the lighting lamp 510 into the inner chamber 200 is reflected.

That is, an installation height of the lighting may be lowered as much as possible by providing the reflected light instead of the direct light, thereby minimizing the height of the pet incubator as well.

Meanwhile, according to the embodiment of the present invention, it is further proposed that the pet incubator may further include a cooling unit 600 for cooling the inner chamber 200 between the bottom frame 130 of the case body 100 and the bottom surface of the inner chamber 200 (see FIG. 2).

That is, the additional provision of the cooling unit 600 ensures that the interior of the inner chamber 200 always maintains a comfortable temperature for the pet.

As shown in FIG. 22, this cooling unit 600 may be configured to include a cooling pad 610 that is heat-exchanged while being in close contact with the bottom of the inner chamber 200, one or at least two thermoelectric elements 620 installed in close contact with the bottom surface of the cooling pad 610 in which an endothermic reaction is performed at the contact surface with the cooling pad 610 by the power supply and an exothermic reaction is performed at the opposite surface, a heat dissipation fin 630 coupled to a surface on which the exothermic reaction of the thermoelectric elements 620 is made and dissipating heat generated by the exothermic reaction, and a heat dissipation fan 640 for blowing heat dissipation air to the heat dissipation fin 630. This structure allows the pet to directly feel the coolness as well as the temperature drop in the inner chamber 200 through a direct endothermic reaction to the bottom surface in the inner chamber 200.

In this case, each of the thermoelectric elements 620 may be rapidly cooled by arranging all of the thermoelectric elements to be in close contact with the inner surface in the inner chamber 200 to perform an endothermic reaction, as an example. Of course, if a heating function for the inner chamber 200 is further provided, it is preferable that some of the thermoelectric elements 620 may be disposed to perform the endothermic reaction on the side in close contact with the inner surface of the inner chamber 200, while the remaining thermoelectric elements 620 may be disposed to perform the exothermic reaction on the side in close contact with the inner surface of the inner chamber 200.

The reference numeral 650 in the drawings may be a heat insulating material in which it denotes a configuration to prevent the heat of the cooling pad 610 to be heat-radiated to the room (the outside) due to the exothermic reaction and endothermic reaction of the thermoelectric element 620. The reference numeral 660 in the drawings may be a coupling block in which it denotes a configuration for assisting the phase thermoelectric element 620 to be stably mounted on the heat insulating material 650 and the heat dissipation fin 630.

Meanwhile, in the configuration of the above-described embodiment, the opening and closing cover 151 installed in the opening and closing door 150 may be configured to open and close the ventilating opening 152 by the rotation operation by pulling or pushing to be opened or closed, as an example.

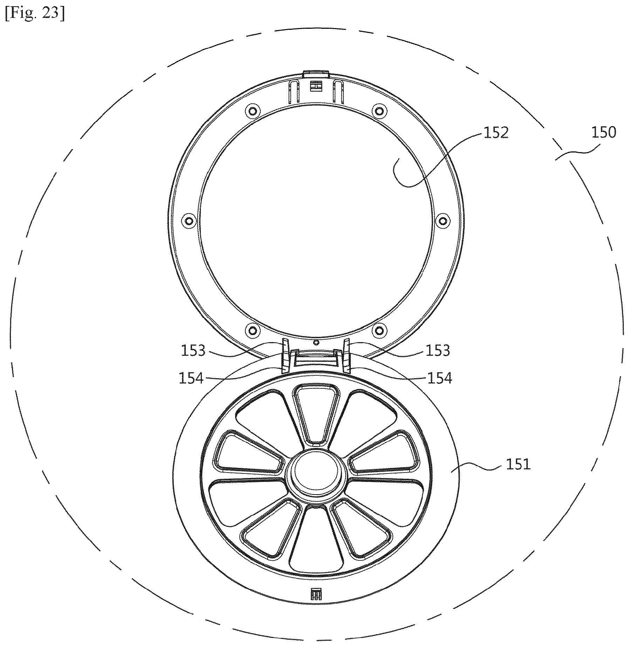

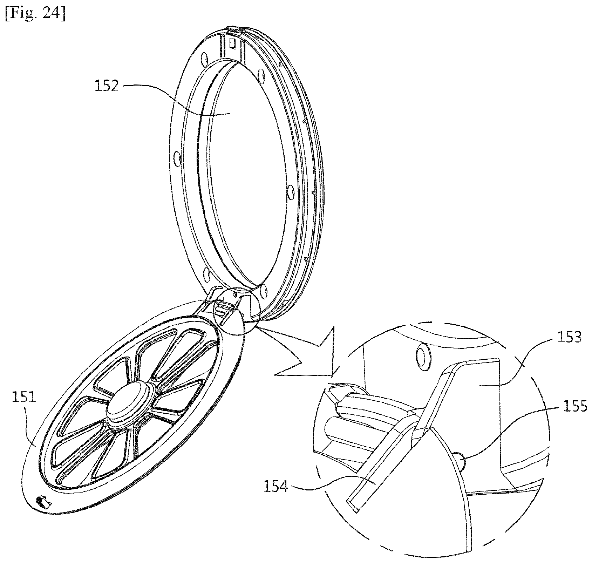

To this end, the ventilating opening 152 may be configured to be formed such that the two hinge plates 153 are protruded on a portion of the circumferential side thereof and formed side by side to face each other, and one portion of the opening and closing cover 151 may be configured to be hinged (155) and coupled to the two hinge plates. Accordingly, it is made to open and close the ventilating opening 152 while being supported by the two hinge plates 153. In particular, each opening and closing cover 151 may be formed with a cut groove 154 cut to be passed through the two hinge plates 153, and each cut groove 154 may be formed to be gradually inclined toward the inside from the hinged (155) and coupled portion. Accordingly, when the opening and closing cover 151 is opened, the hinge plate 153 may be gradually pressed into the cut groove 154 so as not to be completely opened. As a result, when the opening and closing cover 151 is opened, the opening and closing cover 151 may be completely opened to prevent the occurrence of impact noise caused by hitting the wall surface of the opening and closing door 150. In this regard, it is as shown in FIGS. 23 and 24 attached.

Hereinafter, the action of the pet incubator according to the embodiment of the present invention described above will be described in more detail.

First, if a pet needs to be isolated from the room environment, treated or recovered, the pet may be housed in the inner chamber 200 of the pet incubator and then the opening and closing door 150 is closed to block the inner chamber 200 from the external environment.

In this case, the user may use the restraint switch unit 180 to maintain the opening and closing door 150 in a state constrained to the inner chamber 200.

In this state, the user may operate the opening and closing cover 151 of each ventilating opening 152 formed in the opening and closing door 150 to allow the ventilating opening 152 to be closed. In addition, the user may operate the various operation switches 330 of the control assembly 300 to set the temperature, humidity, oxygen supply amount in the inner chamber 200 and to set whether the lighting lamp 510 is turned on or off.

In addition, when the setting of the various operation controls by the user is completed, the main control unit 310 controls the operation of each operation element based on the set contents.

That is, the main control unit 310 may perform the temperature control of the cooling unit 500 based on the set temperature in the internal chamber 200, perform the operation control of the humidifier 142 and the oxygen supplier 143 based on the set humidity and oxygen supply amount, and perform the operation control of the lighting unit 500 based on whether the lighting lamp 510 is turned on or off. In this case, information generated by the operation control described above (for example, the temperature, humidity, oxygen amount, etc. in the inner chamber) may be displayed on the display window 320 so that it may be configured to allow the user to accurately recognize various information related to the current operation status of the pet incubator.

In addition, in the general situation described above, the blowing fan 420 of the air circulation unit 400 may be operated according to information on a predetermined operating time, whereby the air in the inner chamber 200 is sequentially passed through the first air outlet 235 and the second air outlet 244 and discharged into the duct body 410 of the inner chamber 200. Also, the air passed through the blowing fan 420 while moving in the duct body 410 is sequentially passed through the second air inlet 343 and the first air inlet 234 under the guidance of the partition plate 430 and introduced into the space in the inner chamber 200 again. As a result, the temperature in the inner chamber 200 can be maintained at an appropriate temperature.

In the above state, when the ventilation operation is selected by user's request, the rotation of the partition plate 430 by driving of the tilting motor 434 may be made. As a result, the second air inlet 343 may be closed by the partition plate 430 and, at the same time, the rear surface of the duct body 410 may be opened, such that the air sequentially passed and discharged through the first air outlet 235 and the second air outlet 344 from the inside of the inner chamber 200 may be discharged to the room (outside space of the case body) through the open rear surface of the duct body 410.

In particular, in this case, the opening and closing cover 151 of the opening and closing door 150 may be operated to open the ventilating opening 152, whereby new air in the room may be introduced into the inner chamber 200 through the ventilating opening 152 and the inside of the inner chamber 200 may be ventilated.

If the pet contained in the inner chamber 200 is excreted, the excrement may be collected and stored in an excrement receiver 250 provided at the front side bottom surface of the inner chamber 200. Accordingly, the pet can be prevented from being soiled due to the excrement.

In addition, pets for recovery after surgery need to be maintained in a cool environment compared to a normal room temperature. In this case, the main control unit 310 may perform the control of the cooling unit 600.

That is, when cooling of the internal chamber 200 is selected by the user's request, the main control unit 310 may control to perform a cooling operation through supplying power to the thermoelectric element 620 and supplying power to the heat dissipation fan 640.

Therefore, the cooling pad 610 in contact with the surface where the endothermic reaction of the thermoelectric element 620 is performed may be cooled, and the cooled cooling pad 610 may be heat-exchanged with the bottom surface of the inner chamber 200, and simultaneously may cool the bottom surface of the inner chamber 200.

In addition, the heat generated from the thermoelectric element 620 may be conducted to the heat dissipation fin 630 in contact with the surface on which the exothermic reaction of the thermoelectric element 620 is made, and the conducted heat may be radiated as heat dissipation air by the heat dissipation fan 640.

Meanwhile, when an unexpected failure occurs during the operation of the pet incubator described above, or when a situation such as a replacement of a lighting lamp 510 or an update of a program occurs, the repair work on the failure site can be performed with the top of the pet incubator open, by simply separating only the upper frame 120 of the case body 100.

If it is impossible to repair only by means of the above work, the control assembly 300 may be slid to take out from the upper space in the case body 100 and then delivered to a company for an after-sales service.

In other words, rather than delivering the entire pet incubator to the AS company, it is possible to minimize the delivery volume by taking out only the control assembly 300.

As a result, the pet incubator of the present invention may place the control assembly 300 on the upper surface of the inner chamber 200 in the case body 100. Accordingly, the maintenance can be easily performed through an operation of separating only the upper frame 120 of the case body 10. In particular, since the control assembly 300 may be taken out from the corresponding portion as a drawer type, the delivery for repair can be made easily.

In addition, the pet incubator of the present invention may be composed of an edge frame 110 in which each corner of the case body 100 is provided separately from other wall surfaces. In particular, each of the edge frames 110 may be formed to be curvature, and the extension portion 111 and the strength reinforcing member 114 may be formed on the inner surface of the edge frame 110. As a result, it is possible to provide robustness against internal and external forces by the extension portion 111 and the strength reinforcing member 114 while providing a beautiful appearance.

In addition, the pet incubator of the present invention may further be provided with the cooling unit 600 on the bottom surface of the inner chamber 200. Accordingly, the cooling operation for the inner space of the inner chamber 200 can be performed to maintain an optimum temperature for the recovery of the pet.

In addition, the body frame 220 and the upper frame 230 of the inner chamber 200 constituting the pet incubator of the present invention may be configured to be coupled to each other by the coupling member 240 made by injecting a synthetic resin. Accordingly, it is possible to maintain the airtightness of each coupling site, but also to assemble more easily.

In addition, the pet incubator of the present invention may be further provided with the excrement receiver 250 in the inner chamber 200, so that excrement may be temporarily stored in the excrement receiver 250. Accordingly, it is possible to prevent the recontamination of the pet due to the excrement.

In addition, the pet incubator of the present invention may be configured such that a locking portion (a locking area) of the locking member 182 which is locked to and restrained by the front edge portion of the inner chamber 200 may be maximized. Accordingly, even if the opening and closing door 150 is impacted in the opening direction by the pet in the inner chamber 200. The unwanted opening of the opening and closing door 150 can be prevented.

In addition, the pet incubator of the present invention may be configured such that when the control assembly 300 is received, the restraining flanges 101 which is bent and formed on the inner wall surface of the both sides of the case body 100 may be engaged and restrained by restraining jaws 341 formed on the surfaces of both sides of the receiving portion 340 of the control assembly 300. Accordingly, the left and right movement of the control assembly 300 can be prevented, so that the take out phenomenon of the control assembly 300 caused undesirably due to the shaking of the pet incubator can be prevented.

In addition, the pet incubator of the present invention may be provided to minimize the height of the lighting unit 500 through the structural improvement of the lighting unit 500. Accordingly, the height of the overall pet incubator can also be minimized.

In addition, the pet incubator of the present invention may be configured to further provide an air circulation unit 400. Accordingly, it is possible to enable a ventilation operation in which that the air in the inner chamber 200 is continuously circulated only in the inner chamber 200, or the air in the inner chamber 200 is discharged to the room and at the same time, new air in the room is introduced into the inner chamber 200.

As described above, the pet incubator of the present invention may place the control assembly on the upper surface of the inner chamber in the case body. Accordingly, the maintenance can be easily performed through an operation of separating only the upper frame of the case body. In particular, since the control assembly may be taken out from the corresponding portion as a drawer type, the present invention has the effect that the delivery for repair can be made easily.

In addition, the pet incubator of the present invention may be composed of an edge frame in which each corner of the case body is provided separately from other wall surfaces. In particular, each of the edge frames may be formed to be curvature and the extension portion and the strength reinforcing member may be formed on the inner surface of the edge frame. Therefore, the present invention has the effect of providing robustness against internal and external forces by the extension portion and the strength reinforcing member while providing a beautiful appearance.

In addition, in the pet incubator of the present invention, each edge frame constituting the case body may be curvature and the extension portion and the intensity reinforcement frame may be formed on the inner surface of the edge frame. Therefore, the present invention has the effect of providing robustness against internal and external forces by the extension portion and the strength reinforcing frame while providing a beautiful appearance.

In addition, the pet incubator of the present invention may further be provided with the cooling unit on the bottom surface of the inner chamber. Therefore, the present invention has the effect in that the cooling operation for the inner space of the inner chamber can be performed to maintain a temperature for the recovery of the pet.

In addition, the inner chamber of the pet incubator of the present invention may be configured to be coupled to each other by the coupling member made by injecting a synthetic resin. Therefore, the present invention has the effect in that it is possible to maintain the airtightness of each coupling site, but also to assemble more easily.

In addition, the pet incubator of the present invention may be further provided with the excrement receiver in the inner chamber, so that excrement may be temporarily stored in the excrement receiver. Therefore, the present invention has the effect in that it is possible to prevent the recontamination of the pet due to the excrement.

In addition, the pet incubator of the present invention may be configured such that a locking portion of the locking member which is locked to and restrained by the front edge portion of the inner chamber may be maximized. Therefore, the present invention has the effect in that the unwanted opening of the opening and closing door can be prevented even if the opening and closing door is impacted in the opening direction by the pet in the inner chamber.

In addition, the pet incubator of the present invention may be configured such that when the control assembly is received, the restraining flanges which is bent and formed on the inner wall surface of the both sides of the case body may be engaged and restrained by restraining jaws formed on the surfaces of both sides of the receiving portion of the control assembly. Therefore, the present invention has the effect in that the left and right movement of the control assembly can be prevented, so that the take out phenomenon of the control assembly caused undesirably due to the shaking of the pet incubator can be prevented.

In addition, the pet incubator of the present invention may be provided to minimize the height of the lighting unit through the structural improvement of the lighting unit. Therefore, the present invention has the effect in that the height of the overall pet incubator can also be minimized.

In addition, the pet incubator of the present invention may be configured to further provide an air circulation unit. Therefore, the present invention has the effect in that it is possible to enable a ventilation operation in which that the air in the inner chamber is continuously circulated only in the inner chamber, or the air in the inner chamber is discharged to the room and at the same time, new air in the room is introduced into the inner chamber.

## Claims

1. A pet incubator comprising:
a case body which forms an appearance, the case body having an opening and closing door formed of a transparent material so as to be able to observe an inside of the pet incubator and installed on a front surface of the pet incubator to be opened and closed;
an inner chamber installed in the case body and providing an incubating space of the pet, a front surface thereof being opened;
a control assembly provided with a main control unit for operation control and installed so as to be positioned on an upper side of the inner chamber of the inside of the case body and taken out while sliding out of the case body;
an air circulation unit installed in the control assembly and operated by the control of the main control unit to circulate air in the inner chamber or to ventilate the inner chamber and a room; and
a lighting unit installed in the control assembly and operated by the control of the main control unit to provide lighting into the inner chamber.

2. The pet incubator according to claim 1, wherein the case body includes:
edge frames provided at each corner and formed of curvature;
an upper frame installed between two upper edge frames of each of the edge frames and forming an upper surface;
a bottom frame installed between two lower edge frames of each of the edge frames and forming a bottom surface; and
a side frame forming each of both sides.

3. The pet incubator according to claim 2, wherein a mounting portion on which the upper frame or the bottom frame is placed is bent and formed on any one end portion to which the upper frame or the bottom frame of the inner surface of each edge frame is coupled, and
an extension portion formed by screw grooves for screwing with the side frame is formed at a center end portion of the inner surface of each edge frame, and a strength reinforcing member provided to prevent bending deformation of the edge frame is formed at a portion of the center of the inner surface of each edge frame.

4. The pet incubator according to claim 1 or 2, wherein the opening and closing door is formed of a transparent material to allow the internal observation.

5. The pet incubator according to claim 4, wherein the upper surface and the bottom surface of one end of the opening and closing door is hinged and coupled to the case body, and
the other end of the opening and closing door is further provided with a restraint switch unit which is elastically operated to be caught and restrained by the front edge portion of the inner chamber during the non-pressurization and to release the restraint during the pressurization.

6. The pet incubator according to claim 1, wherein a plurality of ventilating openings is formed on the surface of the opening and closing door, and each ventilating opening is configured to be opened and closed by an opening and closing cover,
the ventilating opening is configured to be formed such that the two hinge plates are protruded on a portion of the circumferential side thereof and formed side by side to face each other, and one portion of the opening and closing cover is configured to be hinged and coupled to the two hinge plates, so that it is made to open and close the ventilating opening while being supported by the two hinge plates, and
the opening and closing cover is formed with a cut groove cut to be passed through the two hinge plates, respectively, and each of the cut grooves is formed to be gradually inclined toward the inside from the hinged and coupled portion, so that when the opening and closing cover is opened, the hinge plate is gradually pressed into the cut groove so as not to be completely opened.

7. The pet incubator according to claim 1, wherein the inner chamber is configured to include:
an edge frame formed in a rectangular frame structure forming an edge portion of the front surface;
a body frame forming a wall surface of both sides and a bottom surface and a portion of the rear surface; and
an upper frame forming an upper surface and the remaining portion of the rear surface; and
wherein each opposing portion between the body frame and the upper frame is configured to be coupled to each other by a coupling member made by injecting a synthetic resin.

8. The pet incubator according to claim 1, wherein the body frame is configured to form both side wall surfaces by bending the both sides upward with respect to the bottom surface and to form a portion of the rear surface by bending the portion of the rear side upward, and
the upper frame is configured to form the remaining portion of the rear surface by bending a portion of the rear side downward with respect to the upper surface.

9. The pet incubator according to claim 1, further comprising:
an excrement receiver formed to be recessed to temporarily store the excrement excreted by the pet is provided, separately from the inner chamber, and coupled and installed in the inner chamber, at a front side portion of the bottom surface in the inner chamber, and coupled and installed in the inner chamber; and
a packing member provided in a coupling portion between the inner chamber and the excrement receiver to prevent a gap generated due to the coupling portion.

10. The pet incubator according to claim 1, wherein guide portions for supporting a sliding movement of the control assembly are provided at both sides of the upper surface of the inner chamber, respectively, and
wherein the control assembly is installed to receive the guide of each guide portion and taken out while being slidingly moved back and forth in a drawer type.

11. The pet incubator according to claim 10, wherein a restraining flange is bent and formed on inner wall surfaces of both sides of the case body, and
a restraining jaw constrained to prevent left and right movement by engaging the restraining flange when received in the case body is protruded and formed on both sides of the control assembly.

12. The pet incubator according to claim 1, wherein a first air inlet and a first air outlet are sequentially arranged side by side along the front and rear directions and spaced apart from each other on the upper surface of the inner chamber, and are sequentially penetrated and formed, and
the control assembly is configured such that a second air inlet communicated corresponding to the first air inlet and a second air outlet communicated corresponding to the first air outlet are penetrated and formed, respectively, when the control assembly is received in the case body, and
wherein the air circulation unit is configured to include:
a duct body formed as a box body in which the bottom surface and rear surface are opened, and installed to cover the second air inlet and the second air outlet at the same time while being installed along a formation direction of the second air inlet and the second air outlet; and
a blowing fan forcibly blowing air while being installed between a space in communication with the second air inlet and a space in communication with a second air outlet.

13. The pet incubator according to claim 12, wherein the rear side space in the duct body is further provided with a partition plate for selectively blocking the second air outlet and any portion of the open rear surface of the duct body,
the partition plate is rotatably coupled to a hinge at the rear end of the duct body, and
a tilting gear having a fan-shaped structure is fixedly installed at a portion of the hinge exposed to the outside of the duct body, the outer surface of the duct body is further provided with a tilting motor which provides a driving force to rotate the tilting gear while a pinion gear engaged with the tilting gear is axially coupled.

14. The pet incubator according to claim 1, wherein a through hole is penetrated and formed in a portion of the center side of the upper surface of the inner chamber, and
a communication hole communicated corresponding to the through hole is penetrated and formed in the control assembly when the control assembly is received in the case body, and
wherein the lighting unit is configured to include:
an lighting lamp positioned adjacent to the communication hole of the upper surface of the control assembly to provide the lighting; and
a reflection duct installed to surround the lighting lamp in which a portion of the direct upper side of the communication hole is formed to be inclined and the lighting according to the light emitted from the lighting lamp into the inner chamber is reflected.

15. The pet incubator according to claim 1, further comprising:
a cooling unit for cooling the inner chamber between the bottom surface of the case body and the bottom surface of the inner chamber.

16. The pet incubator according to claim 15, wherein the cooling unit is configured to include:
a cooling pad that is heat-exchanged while being in close contact with the bottom of the inner chamber;
one or at least two thermoelectric elements installed in close contact with the bottom surface of the cooling pad in which an endothermic reaction is performed at the contact surface with the cooling pad by the power supply and an exothermic reaction is performed at the opposite surface;
a heat dissipation fin coupled to a surface on which the exothermic reaction of the thermoelectric elements is made and dissipating heat generated by the exothermic reaction; and
a heat dissipation fan for blowing heat dissipation air to the heat dissipation fin.
